**Europäisches Patentamt**

**European Patent Office**

**Office européen des brevets**

(19)

(11) Veröffentlichungsnummer: **0 068 252**
A2

# EUROPÄISCHE PATENTANMELDUNG

(12)

(21) Anmeldenummer: 82105158.8

(22) Anmeldetag: 12.06.82

(51) Int. Cl.³: **F 03 C 1/02,** F 16 H 25/18, F 16 H 25/02

(30) Priorität: **18.06.81 CH 4025/81**

(43) Veröffentlichungstag der Anmeldung: **05.01.83** **Patentblatt 83/1**

(84) Benannte Vertragsstaaten: **AT DE FR GB IT NL SE**

(71) Anmelder: **Bachofen AG, Ackerstrasse 42, CH-8610 Uster (CH)**

(72) Erfinder: **Kägi, Bruno, Juststrasse 56, CH-8706 Meilen (CH)**

(74) Vertreter: **Petschner, Goetz, Patentanwaltsbüro G. Petschner Seidengasse 18, CH-8001 Zürich (CH)**

(54) Druckmediumbetriebene Linear-Antriebsvorrichtung.

(57) Die druckmediumbetriebene Linear-Antriebsvorrichtung umfaßt eine schlittenförmige Antriebseinheit (10), welche sich an einer Kurvenprofil-Schubleiste (20) abstützt. Die Antriebseinheit (10) umfaßt Schrittelemente (1, 2, 3) in Form von Kolben-Zylinder-Systemen, welche über einen Drehschieber (4) von einem Druckmittel angesteuert werden zur Erzeugung einer Relativbewegung zwischen Antriebseinheit (10) und Schubleiste (20). Die Schrittelemente (1, 2, 3) bilden dabei je mit einerseits an den Kolben (30) der Schrittelemente, andererseits am Gehäuse (10) der Antriebseinheit angelenkten Hebelmitteln (35) sich selbst zentrierende Schubgelenkantriebselemente. Dies ermöglicht erstmals eine praktische Ausführungsform einer solchen Vorrichtung.

Druckmediumbetriebene
Linear-Antriebsvorrichtung

Die vorliegende Erfindung betrifft eine druckmediumbetriebene  Linear-Antriebsvorrichtung zur Erzeugung einer Relativverschiebung zwischen einer schlittenförmigen Antriebseinheit und einer Kurvenprofil-Schubleiste, wobei die Antriebseinheit eine Mehrzahl vom Druckmedium betätigbare,
Schrittelemente bildende Kolben-Zylinder-Systeme aufweist,
deren Kolben sich am Profil der Schubleiste abstützen und
deren Zylinder je über Steuerventilmittel mit der Druckmediumsquelle verbunden sind.

Linear-Antriebsvorrichtungen dieser Art sind durch die
DE-OS Nr. 2 359 779 oder die GB-PS Nr. 1 398 012 bekannt
geworden. In diesen Schriften wird der Aufbau und die Funktionsweise solcher Linear-Antriebsvorrichtungen im wesentlichen theoretisch abgehandelt ohne nähere Hinweise auf
mögliche, praktikable Ausführungsformen zu geben. Beispielsweise wird in diesen Schriften vorgeschlagen, Kolben-Zylinder-Systeme  üblicher Bauart zu verwenden, was infolge der
Wirksamkeit hoher Querkräfte praktisch kaum durchführbar
sein dürfte. Ebensowenig ist in diesen Schriften aber auch
der Anwendungsbereich solcher Linear-Antriebsvorrichtungen
erkannt worden, sind diese doch in diesen Schriften auf den
Antrieb von Werkzeugmaschinenschlitten beschränkt.

Es ist somit Aufgabe der vorliegenden Erfindung eine druckmediumbetriebene Linear-Antriebsvorrichtung zu schaffen,
welche allen praktischen Anforderungen gerecht werden kann
und welche ein breites Anwendungsspektrum erlaubt.

Dies wird nun erfindungsgemäss dadurch erreicht, dass die
Schrittelemente je mit einerseits an den Kolben der Schrittelemente, andererseits am Schlittengehäuse angelenkten Hebelmitteln sich selbst zentrierende Schubgelenkantriebselemente
bilden.

Hierbei ist es vorteilhaft, wenn die Kolben-Zylinder-Systeme aus Luftbalgfedern mit einem Kolbenteil oder aus in den Zylindern eingesetzte Roll-Membranen mit lose aufgelegtem Kolbenteil gebildet sind, die sich in Reihe je am Boden des Schlittengehäuses abstützen, wobei Kanäle die Kolben-Zylinder-Systeme mit den ebenfalls am Schlittengehäuse befestigten Steuerventilmitteln verbinden.

Zweckmässig trägt dann jedes freie Kolbenende ein mit dem Profil der Schubleiste zusammenwirkendes Abwälzglied und ist mit dem einen Ende eines Schwenkhebels verbunden, dessen anderes Ende schwenkbar am Schlittengehäuse befestigt ist.

Weiter sollte sich das Schlittengehäuse über Gegenrollen auf der Flachseite der Schubleiste abstützen.

Diese erfindungsgemässen Massnahmen gestatten nun eine kompakte und relativ einfache Linear-Antriebsvorrichtung, die durch die besondere erfindungsgemässe Ausgestaltung der Kolben-Zylinder-Systeme als Schubgelenkantriebselemente geeignet ist, sämtliche auftretenden Querkräfte behinderungsfrei aufzunehmen mit optimalster Schubkrafterzeugung bei geringstem Druckbedarf. Hierbei kann das Druckmedium Luft, Wasser, Oel und dgl. sein.

Da diese Antriebsvorrichtung geeignet ist, bei kleinstem Bauvolumen hohe Schubkräfte zu erzeugen, wird diese erfindungsgemäss verwendet als Mittel zur Bewegung von Toren, Hangar-Toren, Schleusen-Schiebern und dgl. Vergleichsweise der bisher für diese Anwendungsbereiche installierten Elektromotoren mit Kettenantrieben und dgl. gestattet die erfindungsgemässe Antriebsvorrichtung hier eine wesentliche Vereinfachung der Baukonzeption, eine grosse Gewichtseinsparung bis zu Zweidritteln vergleichsweise bisheriger Antriebe sowie eine erhebliche Kostensenkung. Der Antrieb ist dabei sowohl industriell als auch für Private geeignet und lässt sich in jeder Neigung bis vertikal verwenden.

In der Bewegungsumkehr kann die Antriebsvorrichtung erfindungsgemäss aber auch als Laufkatze, Transportschlitten, Medienverteiler usw. verwendet werden.

Eine beispielsweise Ausführungsform des Erfindungsgegenstandes soll nachfolgend anhand der Zeichnung näher erläutert werden. Es zeigen:

Fig. 1 eine Prinzipdarstellung der erfindungsgemässen druckmediumbetriebenen Linear-Antriebsvorrichtung;
Fig. 1A eine Ausführungsvariante gemäss Fig.1;
Fig. 2 eine Prinzipdarstellung zur Erläuterung der Erzeugung der Linearbewegung;

Fig. 3 ein praktisches Ausführungsbeispiel, in Seitenansicht, und

Fig. 4 ein Schnitt entlang der Schnittlinie IV - IV in Fig.3 in grösserem Massstab.

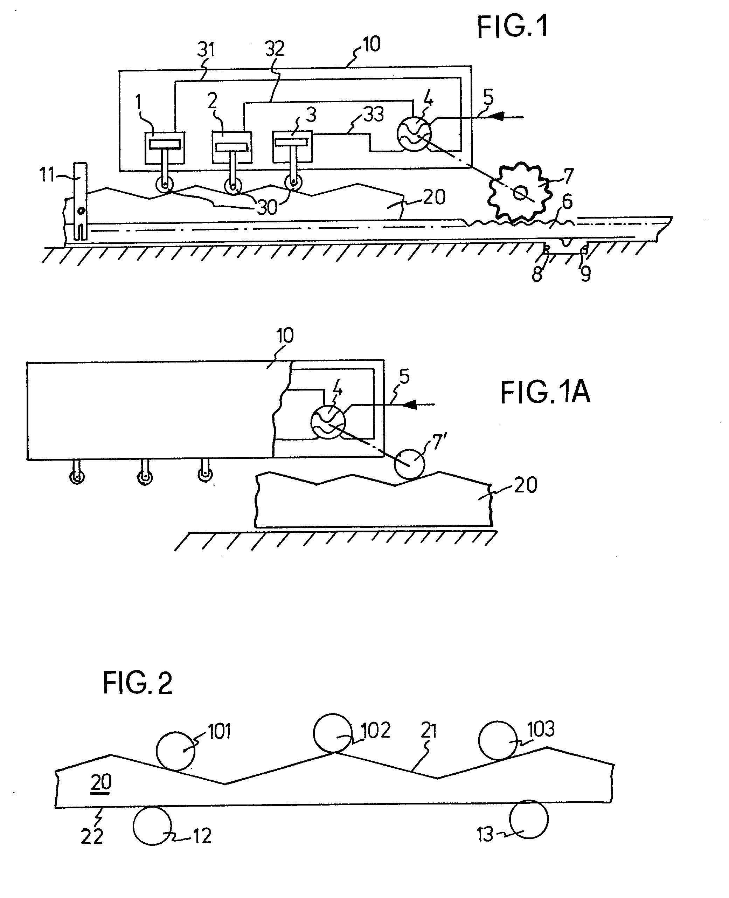

Anhand der Figuren 1 und 2 soll zunächst das Funktionsprinzip der erfindungsgemässen druckmediumbetriebenen Linear-Antriebsvorrichtung beschrieben werden.

Bei der Anordnung gemäss Fig. 1 sind an einer schlittenförmigen Antriebseinheit 10 drei sogenannte Schrittelemente 1, 2 und 3 in Form von nachfolgend noch näher zu beschreibenden druckmittelbetriebenen Kolben-Zylinder-Systemen vorgesehen. Diese Schrittelemente 1, 2 und 3 werden über einen üblichen Drehschieber 4 vom durch die Leitung 5 zugeführten Druckmittel angesteuert und stützen sich an einer Kurvenprofil-Schubleiste 20 ab. Hierbei erfolgt die Verdrehung des Drehschiebers 4 bei der Relativbewegung zwischen der Antriebseinheit 10 und der Schubleiste 20 über eine der Schubleiste 20 parallelen Zahnstange 6, auf welcher sich ein Zahnrad 7 des Drehschiebers 4 abwälzt.

Die Bewegungsrichtung der Bewegung zwischen Antriebseinheit
10 und Schubleiste 20 wird in bekannter Weise durch die Oeffnungswinkel und Positionen des Drehschiebers bestimmt, wobei
die Vor- und Rückwärtsbewegung entweder durch die Umsteuerung
der Ein- und Auslassöffnungen für das Druckmedium oder durch
Veränderung der relativen Winkelposition des Drehschiebers
gegenüber der Schubleiste erfolgen kann. Letztere kann auch
durch Verschiebung der Zahnstange 6 erfolgen. Dargestellt ist
die Ruhelage der Antriebsvorrichtung. Auf eine Verschiebung
der Zahnstange 6 bis zum Anschlag 8 oder 9 (über den Schalthebel 11) erfolgt der Vorschub der Schrittelemente in der
einen bzw. anderen Richtung.

Eine sinngemässe analoge Konstruktion kann ebenfalls in elektrischer Art durch Verwendung von Magneten und Drehschaltern
vorgesehen werden. Bei einer elektrisch betätigten oder gesteuerten Ausführungsform besteht ferner die Möglichkeit,
den Drehschieber und die Zahnradkoppelung durch direkt abtastende Schleifkontakte zu ersetzen, wobei die Kontaktbahnen parallel zur Schubleiste 20 verlaufen und einen linearen
Kollektor bilden. Ferner ist eine digitale Steuerung über
Lochband oder eine Parallelsteuerung über Fernanzeigesignale
oder dgl. möglich.

Fig. 2 zeigt in schematischer Darstellung Steuerrollen 101,
102 und 103, mit welchen sich die genannten Schrittelemente
1, 2 und 3 an der profilierten Seite 21 der Schubleiste 20
abstützen, wobei für eine praktikable Ausführungsform Gegen-
oder Stützrollen 12 und 13 auf der Flachseite 22 der Schubleiste 20 abrollen. Die Teilung der Schubleiste 20 sowie die
Flankensteilheit des Profils 21 ist dabei variabel und so
ausgebildet, dass sich in jeder Funktionsphase bzw. Relativ-

- 5 -

lage zwischen Antriebseinheit 10 und Schubleiste 20 eine
der genannten Rollen an einer Flanke des Schubleistenprofils
befindet, sodass eine Relativverschiebung zwischen Antriebseinheit 10 und Schubleiste 20 sowohl in der einen als auch
in der anderen Richtung ausgelöst werden kann.

An dieser Stelle sei erwähnt, dass es im Rahmen der Erfindung durchaus möglich ist, Anordnungen mit zwei oder mehr
als drei Schrittelementen vorzusehen. Ferner kann eine Fremdversorgung mit dem Druckmittel über eine Schleppleitung oder
über zu überfahrende Abnahmestationen oder eine Eigenversorgung durch Mitnahme eines Druckmittelbehälters erfolgen.

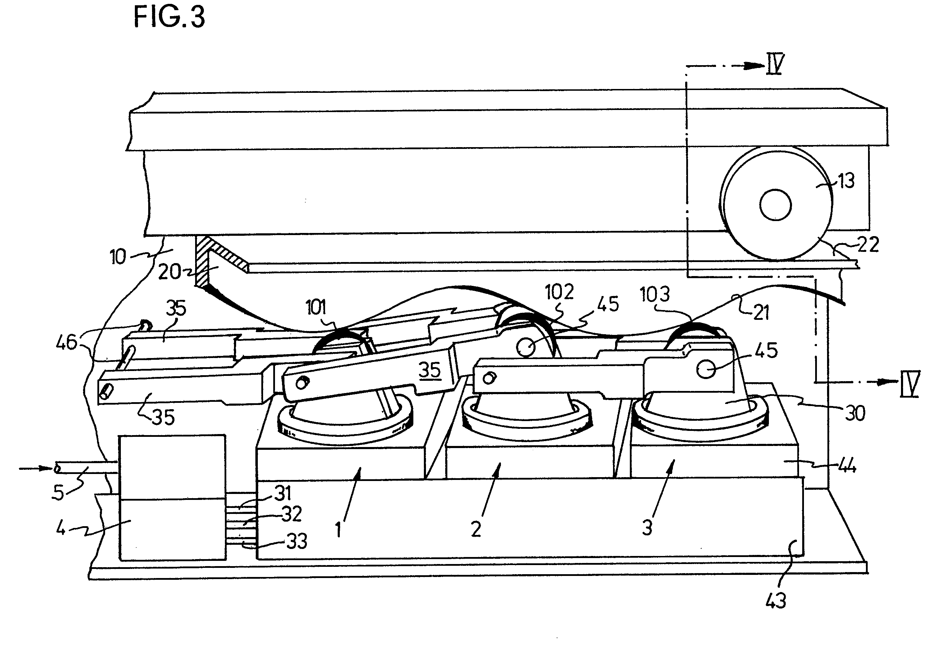

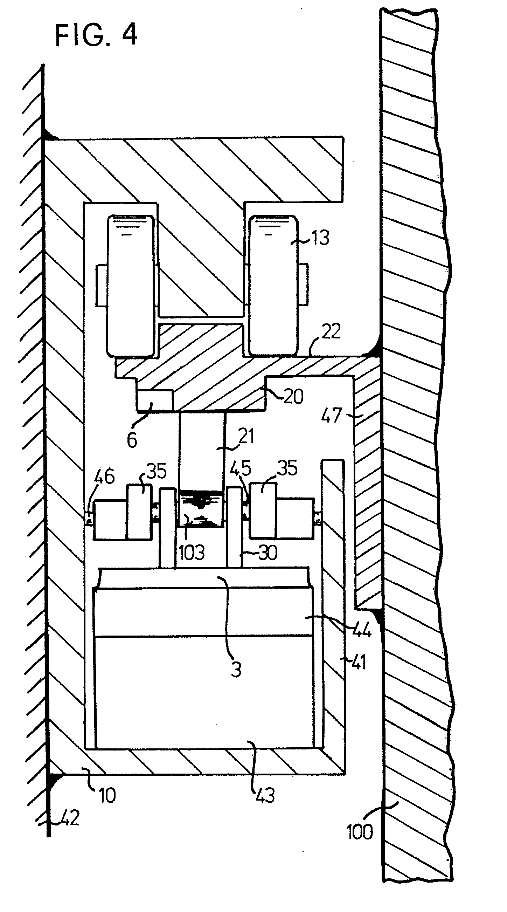

Anhand der Figuren 3 und 4 soll nun ein praktisches Ausführungsbeispiel erläutert werden. Hierbei ist bei Fig. 3 die
dort vorderseitige Wandplatine 41 (Fig.4) zur besseren Sichtbarmachung der Schrittelemente 1,2 und 3 sowie der zugehörigen Schwenkhebel 35 des Schubgelenkantriebes weggelassen.

Beim zu erläuternden Anwendungsbeispiel ist die schlittenförmige Antriebseinheit mit ihrem Schlittengehäuse 10 ortsfest an einer Wand 42, einem Rahmen oder dgl. angeordnet, in
der Regel angeschraubt und dient hier der Hin- und Herbewegung eines Tores 100 oder dgl., an welchem Objekt die Kurvenprofil-Schubleiste 20 über einen Winkelarm 47 fest angeordnet ist (Fig.4). Die zu bewegenden Objekte sind dabei natürlich in der Regel in Verschiebungsrahmen oder dgl. geführt.

Am Boden des Schlittengehäuses 10 stützen sich, in Reihe angeordnet, die drei Kolben-Zylinder-Systeme 1, 2 und 3 ab, wobei ihre Zylinderteile in einem Block 43 zusammengefasst sind.
In die hier nicht sichtbaren Zylinderbohrungen ist dann je
eine sogenannte Rollmembrane eingesetzt und mit dem Deckelteil 44 festgespannt. Rollmembranen und deren Funktionen sind ansich bekannt und müssen hier nicht näher beschrieben werden. Auf diesen Rollmembranen sitzt jeweils der betreffende Kolbenteil 30 mit grossem Radialspiel auf und ragt mit seinem freien, gabelförmigen Ende aus dem Block 43 heraus. Wie bereits beschrieben, steht jedes Kolben-Zylinder-System 1, 2 und 3 über eine ihm zugeordnete Leitung 31, 32 bzw. 33 mit dem Drehschieber 4 in Strömungsverbindung, dessen hier nicht gezeigtes Ritzel in die Zahnstange 6 (Fig.4) parallel der Schubleiste 20 in beschriebener Weise eingreift.

Jedes Kolben-Zylinder-System 1, 2 und 3 ist dank den Eigenschaften der Rollmembrane geeignet, jede von der Hubrichtungabweichende Querkraft aufzunehmen und zu kompensieren, wobei für eine Selbstzentrierung der Systeme jeweils ein Schwenkhebel 35 bzw. Schwenkhebelpaare oder ein gabelförmiger Schwenkhebel am freien Ende der Kolben 30 angreift und dort über Achsen 45 angelenkt ist bzw. sind. Hier sind Schwenkhebelpaare vorgesehen, deren andere Enden über Bolzen 46 an den Seitenplatinen des Schlittengehäuses 10 angelenkt sind.

Frei auf der Achse 45 drehbar ist weiter jeweils eine Rolle 101, 102 bzw. 103 im gabelförmigen Ende des betreffenden Kolbens 30 untergebracht, welche Rollen sich auf der Kurvenbahn 21 der Schubleiste 20 abstützen. Für eine Gegenführung dienen dann Rollenpaare 13, die am Schlittengehäuse 10 drehbar gelagert sind und die sich an der Flachseite 22 der Schubleiste 20 abrollen.

Aus dem Vorbeschriebenen und anhand der Figuren 3 und 4 ergibt sich somit eine robuste, einfache und funktionssichere druckmediumbetriebene Linear-Antriebsvorrichtung, die allen Anforderungen an geringem Gewicht, geringem Preis, hohem Leistungsvermögen, Wartungsfreiheit und weitestem Anwendungsspektrum gerecht wird. Die erfindungswesentlichen Massnahmen liegen dabei in den sich selbst zentrierenden Schubgelenkantriebselementen, die in der Lage sind, bei geringstem Druckmittelbedarf funktionssicher grösste Schubkräfte zu erzeugen. Je nach Bedarf und Grösse der Anordnung lassen sich dabei die vorbeschriebenen Kolben-Zylinder-Systeme auch durch sogenannte handelsübliche Luftbalgfedern ersetzen, deren Speisung über deren Boden erfolgt und deren Kolbenkopf dann mit den Schwenkhebeln 35 verbunden wird.

Weiter ist es auch ohne weiteres möglich, den Drehschieber 4 gemäss Fig. 1A über eine direkt an der Schubleiste 20 abrollende Tastrolle 7' anzusteuern, in welchem Falle auf die parallele Zahnstange 6 und das Zahnrad 7 (Fig.1) verzichtet werden könnte.

Patentansprüche

1. Druckmediumbetriebene Linear-Antriebsvorrichtung zur Erzeugung einer Relativverschiebung zwischen einer schlittenförmigen Antriebseinheit und einer Kurvenprofil-Schubleiste, wobei die Antriebseinheit eine Mehrzahl vom Druckmedium betätigbare, Schrittelemente bildende Kolben-Zylinder-Systeme aufweist, deren Kolben sich am Profil der Schubleiste abstützen und deren Zylinder je über Steuerventilmittel mit der Druckmediumsquelle verbunden sind, dadurch gekennzeichnet, dass die Schrittelemente (1,2 und 3) je mit einerseits an den Kolben (30) der Schrittelemente, andererseits am Schlittengehäuse (10) angelenkten Hebelmitteln (35) sich selbst zentrierende Schubgelenkantriebselemente bilden.

2. Antriebsvorrichtung nach Anspruch 1, dadurch gekennzeichnet, dass die Kolben-Zylinder-Systeme aus Luftbalgfedern mit einem Kolbenteil oder aus in den Zylindern eingesetzte Roll-Membranen mit lose aufgelegtem Kolbenteil (30) gebildet sind, die sich in Reihe je am Boden des Schlittengehäuses (10) abstützen, wobei Kanäle (31, 32, 33)die Kolben-Zylinder-Systeme (1,2,3) mit den ebenfalls am Schlittengehäuse (10) befestigten Steuerventilmitteln (4) verbinden.

3. Antriebsvorrichtung nach den Ansprüchen 1 und 2, dadurch gekennzeichnet, dass jedes freie Kolbenende ein mit dem Profil (21) der Schubleiste (20) zusammenwirkendes Abwälzglied (101, 102, 103) trägt und mit dem einen Ende eines Schwenkhebels (35) verbunden ist, dessen anderes Ende schwenkbar am Schlittengehäuse (10) befestigt ist.

4. Antriebsvorrichtung nach Anspruch 3, dadurch gekennzeichnet, dass sich das Schlittengehäuse (10) über Gegenrollen (12, 13) auf der Flachseite (22) der Schubleiste (20) abstützt.

- 9 -

5. Antriebsvorrichtung nach Anspruch 1 oder 2, dadurch gekennzeichnet, dass die Steuerventilmittel einen durch ein Ritzel (7) gesteuerten Drehschieber (4) umfassen.

6. Antriebsvorrichtung nach Anspruch 1 oder 2, dadurch gekennzeichnet, dass die Steuerventilmittel einen, durch eine an der Kurvenprofil-Schubleiste (20) abrollende Tastrolle (7') gesteuerten Drehschieber (4) umfassen.

7. Verwendung der Antriebsvorrichtung nach den Ansprüchen 1 bis 6 zum Bewegen von Toren, Schiebern und dgl.

8. Verwendung nach Anspruch 7, dadurch gekennzeichnet, dass die Antriebseinheit (10) ortsfest ist und sich die Kurvenprofil-Schubleiste (20) am Tor (100), Schieber oder dgl. befindet.

9. Verwendung der Antriebsvorrichtung nach den Ansprüchen 1 bis 6 als schienengeführte Laufkatze oder dgl.

0068252

1/3

FIG.1

FIG.1A

FIG.2

# FIG.3

FIG. 4